# EUROPEAN PATENT SPECIFICATION

(11) **EP 1 582 426 B1**
(45) Date of publication and mention of the grant of the patent: **20.12.2006**
(21) Application number: 04380076.2
(22) Date of filing: 02.04.2004
(51) Int. Cl.: B60T 7/06, B60R 21/09

(54) **Mechanism for decoupling the brake pedal in the event of collision**
Mechanismus zur Bremspedalentkopplung im Aufprallfall
Mechanisme pour decoupler la pédale de frein en cas de colision

(43) Date of publication of application: 05.10.2005
(73) Proprietor: Autotech Engineering, A.I.E., 48220 Abadiño (Vizcaya) (ES); Gestamp Vigo, S.A., 36400 Porriño (Pontevedra) (ES); MB Irametal, S.A., 46400 Almussafes (Valencia) (ES)
(72) Inventor: Castillo Gonzales, Jaime, 48220 Abadino Vizcaya (ES)
(74) Representative: Carpintero Lopez, Francisco

(56) References cited:
- EP-A- 1 247 701
- US-A1- 2002 074 785

## Description

### OBJECT OF THE INVENTION

The present invention relates to a mechanism for decoupling the brake pedal incorporated in a pedal assembly of a vehicle which allows release of the brake pedal in the event of a collision of the vehicle occurring with displacement of the steering column.

An object of the invention is that in the event of collision the mechanism incorporated in the brake pedal determines the release of the shaft of rotation of the pedal from its supports, so that the pedal is free and does not constitute an obstacle to the normal progress of the steering column thereby impeding displacements of the column in an undesired direction and so preventing the driver from suffering injury.

It is also an object of the invention that the steering column itself determines, in its displacement resulting from a collision, the actuation of the mechanism for release of the brake pedal. This release mechanism can be also applicable to the clutch pedal.

### BACKGROUND OF THE INVENTION

When a head-on collision of a vehicle takes place, be this against an object or against another vehicle major displacements take place in the interior of the vehicle, be this of the engine, of the steering column or of other elements which prove to be highly dangerous insofar as they are introduced into the space where the driver is located.

The steering column for example can move sideways and impact against the brake pedal which is located alongside, which determines that the steering column finds its progress impeded and forces of reaction are originated which will modify the course of displacement of the column and conclude by impacting against the driver causing him serious injury.

In the event of collision of the vehicle the pedal will usually continue attached to the hydraulic control and constitute an obstacle to the displacement of the steering column.

With the aim of preventing the intrusion of these elements into the interior of the vehicle, components and systems are designed that are intended to reduce or remove the negative effects that these intrusions can have for the driver.

In the Patent of Invention EP 1 247 701 pertaining to the same applicant of the present invention, a device for decoupling the brake pedal is disclosed in which the brake pedal swivels around a shaft supported on its ends by some bushes pertaining to some curved segments which are in turn linked by a tube. This tube is in the path of the steering column when the latter is displaced as a consequence of an accident, whereby on suffering the impact of the steering column, the separation is produced of the segments and the swivelling thereof toward the exterior so that the bushes come off the shaft of the brake pedal, which falls resulting in the release of the brake pedal which in this way will not impede the trajectory of the steering column.

US 2002/074785 A1 discloses a mechanism according to the preamble of claim 1.

### DESCRIPTION OF THE INVENTION

The mechanism for decoupling the brake pedal in the event of collision which constitutes the object of this invention offers an alternative solution to allow the progress of the steering column in the event of collision of the vehicle so that the brake pedal does not signify an obstacle resisting the displacement of the steering column and avoids causing injury to the driver.

It is a matter of the actual support of the steering column acting on the mechanism when the collision takes place, so that the brake pedal ceases to be associated with the rod which constitutes the hydraulic control of the brake and is left to swivel freely around its shaft of rotation leaving space for the steering column.

During normal use of the pedal assembly the decoupling mechanism is completely blocked with no possibility whatever of movement.

The mechanism constituted by the actual pedal comprises fundamentally four pieces: the pedal body itself, a detachable piece which is hooked to the rod of the hydraulic control and two toothed pieces which mesh with each other located between the pedal and the detachable piece.

The first toothed piece is facing the steering column support and therefore is that which will receive the impact. In normal operation it is riveted to the pedal body and the detachable piece whereby its relative movement with respect to both is impossible. The other toothed piece which meshes at all times with the previous one has the form of a cam and is hinged to the detachable piece. The body of the pedal incorporates a butt which, in normal operation, rests on the upper area of this toothed cam, transmitting the force applied on the pedal to the detachable piece and from this to the hydraulic control.

The shaft of rotation about which the pedal body rotates traverses the first toothed piece and the detachable piece and is secured at its ends in the fixed supports of the pedal.

When a collision takes place, the steering column support collides against the first toothed piece snapping the rivet which joins it to the pedal body and the detachable piece. This first toothed piece begins to rotate with respect to the shaft of rotation of the brake pedal meshing with the toothed cam and making it rotate around its hinge with the detachable piece. The pedal body which was supported, through the butt on the upper part of the cam, now finds the cam in a lower position and therefore falls freely toward the detachable piece.

The brake pedal is therefore left free to rotate around the shaft of rotation. In this condition the pedal does not signify an obstacle for the steering column.

Certain elements can be added to the system to facilitate the guided fall of the pedal. One option is to add a connecting rod which is hinged on one end to the toothed cam and on the other end to the pedal, so that when the toothed cam begins to rotate, through the action of the first toothed piece, it transmits the rotational motion to the pedal making it turn downwards.

The other alternative is to add two pulleys to the mechanism, one firmly attached to the toothed cam and the other one firmly attached to the pedal body, both pulleys will be linked by means of a belt so that when the toothed cam begins to rotate, through the action of the first toothed piece, it transmit the rotational motion to the pedal making it turn downwards.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

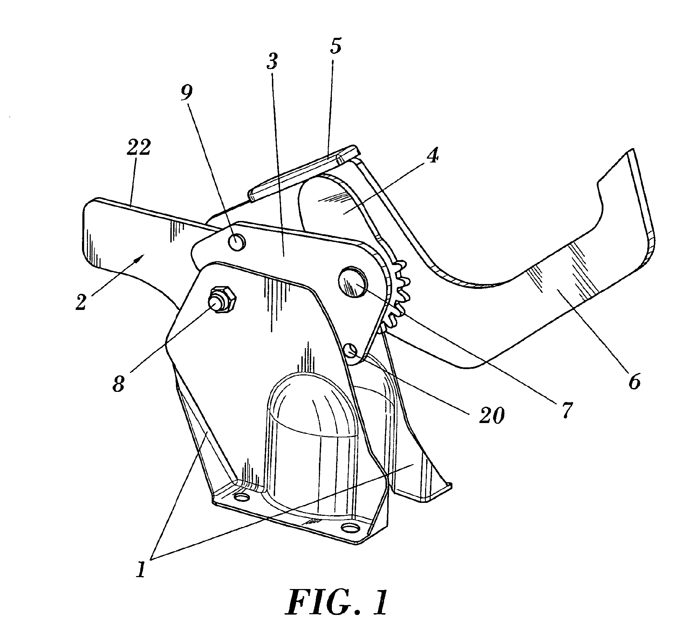

Figure 1. - It shows a left-hand general view in perspective of the pedal assembly in which the supports of the brake pedal can be appreciated as well as the mechanism for release of the brake pedal incorporated in the pedal itself.

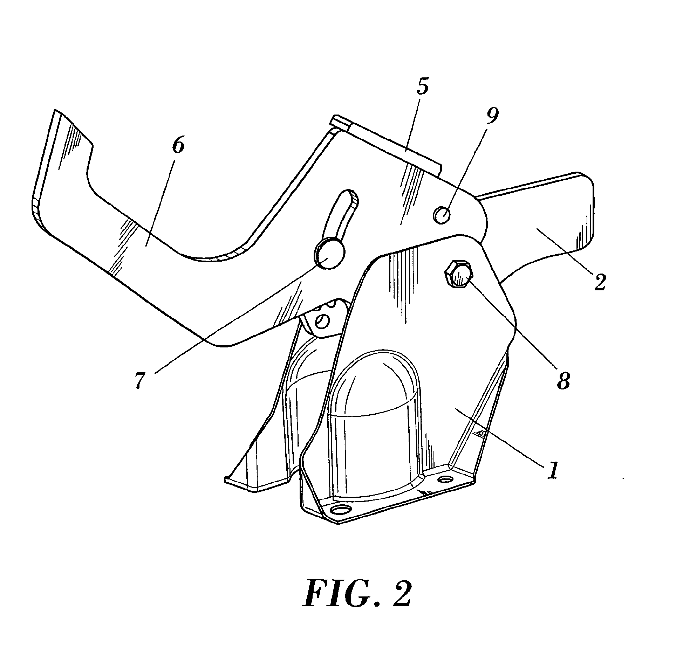

Figure 2. - It shows a right-hand general view in perspective of the pedal assembly in which the pedal body is appreciated in more detail.

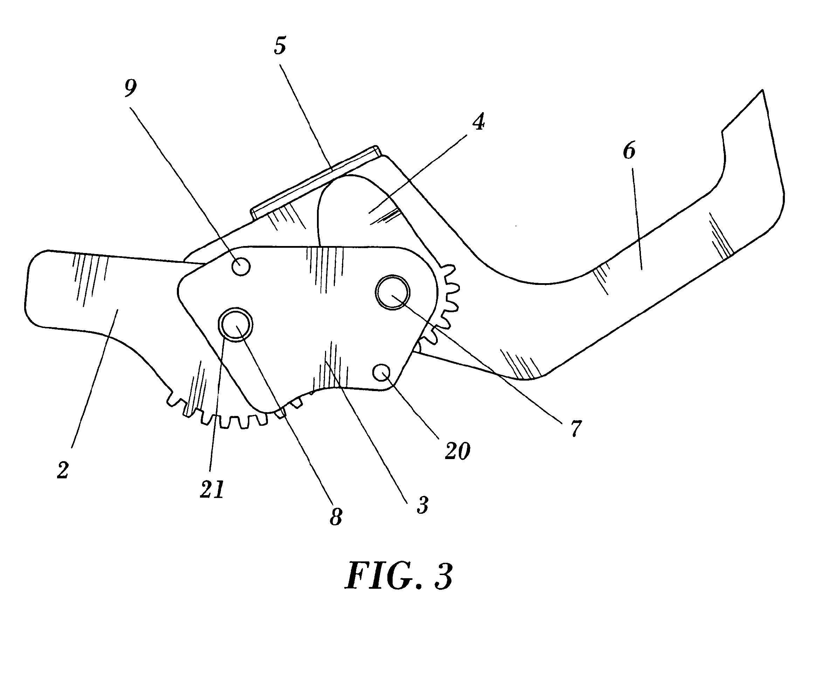

Figure 3. - It shows a side view of the brake pedal and therefore of the mechanism for decoupling in which the pedal body, the two toothed pieces and the detachable piece can be appreciated.

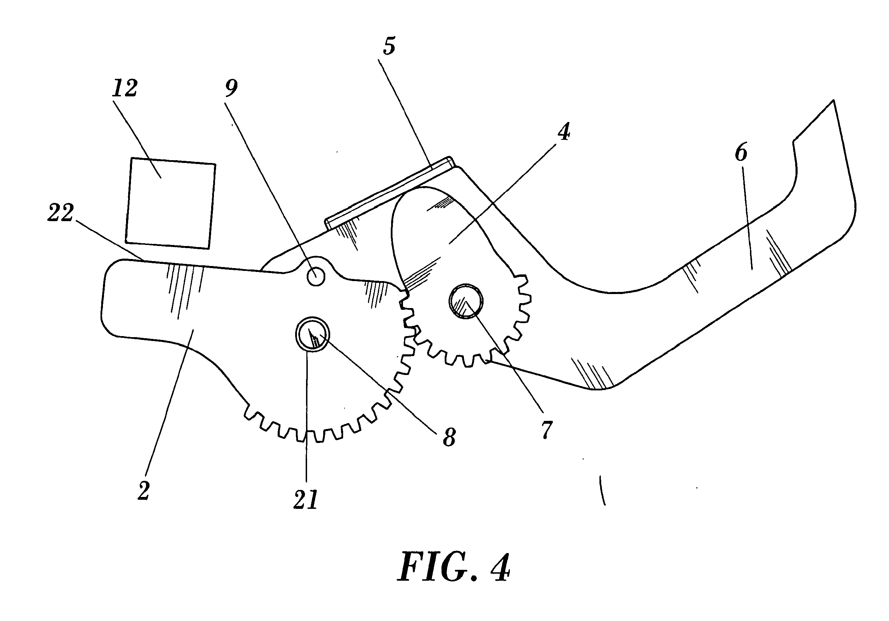

Figure 4. - It shows a side view of the mechanism for decoupling in which the detachable piece has been suppressed to be able to see the two toothed pieces in greater detail and a simplification of the steering column support has been represented.

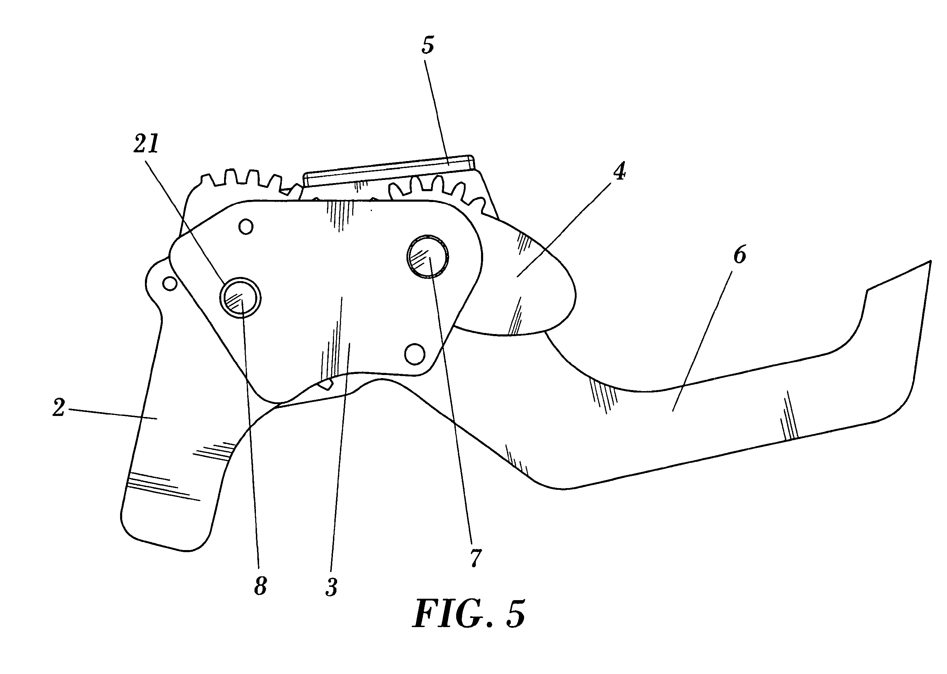

Figure 5. - It shows a side view of the mechanism for decoupling when activated.

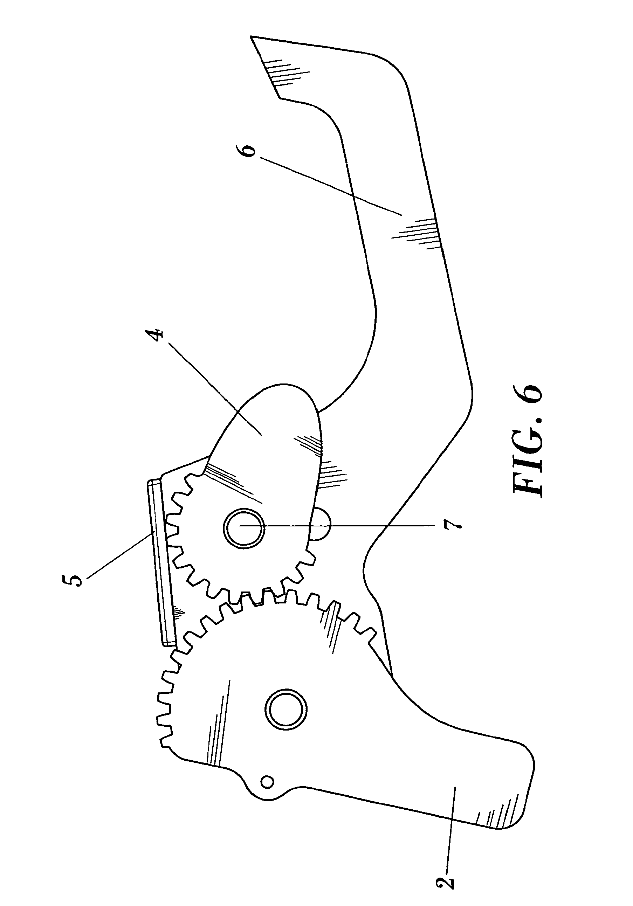

Figure 6. - It shows a side view of the mechanism for decoupling when activated in which the detachable piece has been suppressed to be able to see in more detail how the two toothed pieces have meshed and how the pedal body has fallen.

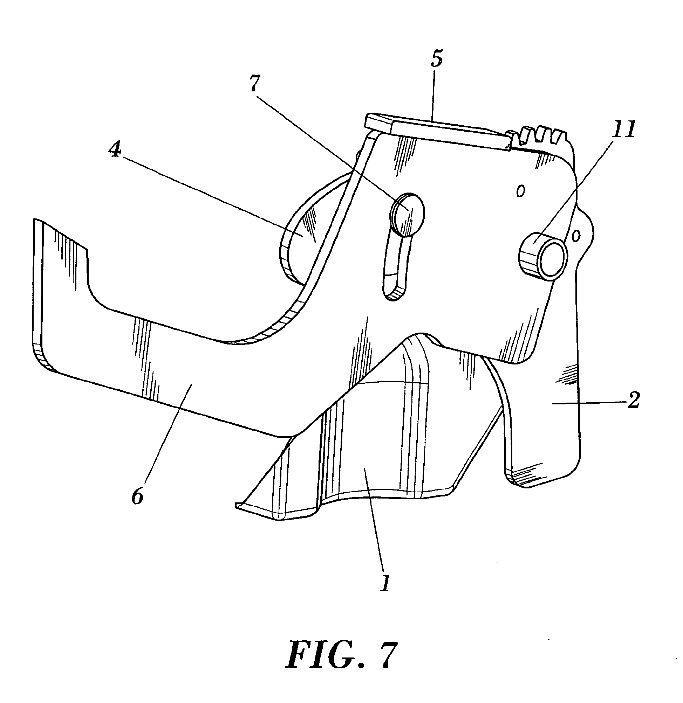

Figure 7. - It shows a right-hand general view in perspective of the pedal assembly in which one of the supports has been suppressed and the mechanism for decoupling is appreciated after being activated.

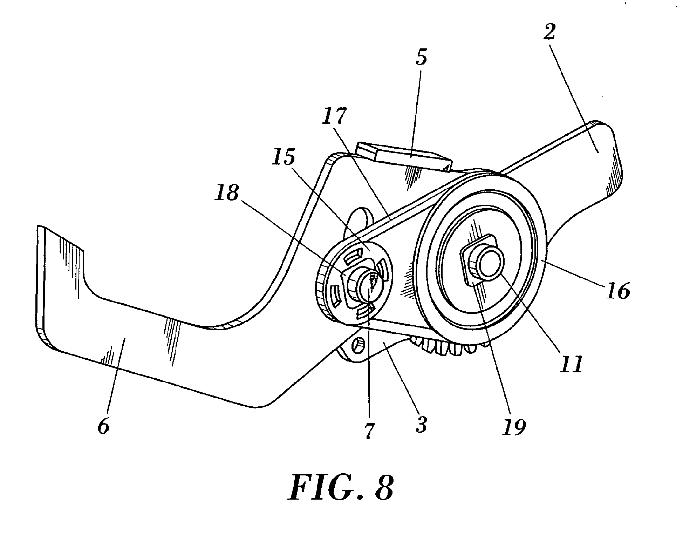

Figure 8. - It shows a right-hand general view in perspective in which a first solution appears to facilitate the guided fall of the pedal consisting of two pulleys, one firmly joined to the toothed cam and another one firmly joined to the pedal body, linked by a belt.

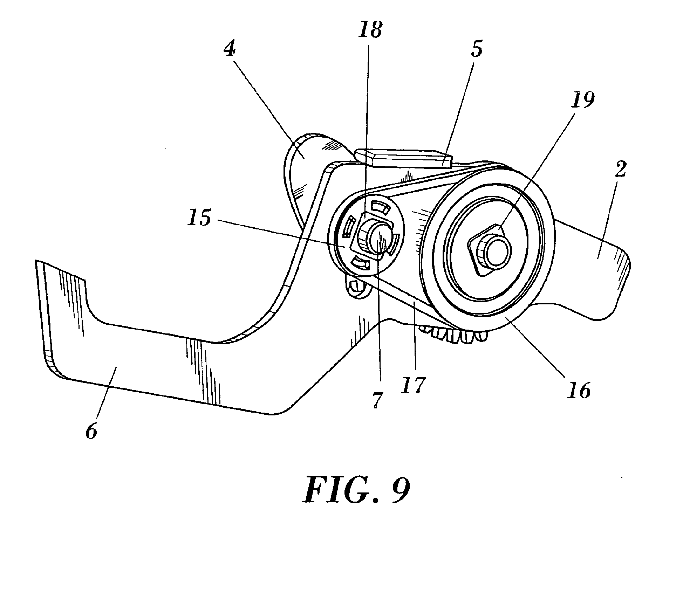

Figure 9. - It shows a right-hand general view in perspective in which the solution of the previous figure appears when the mechanism for decoupling has been activated.

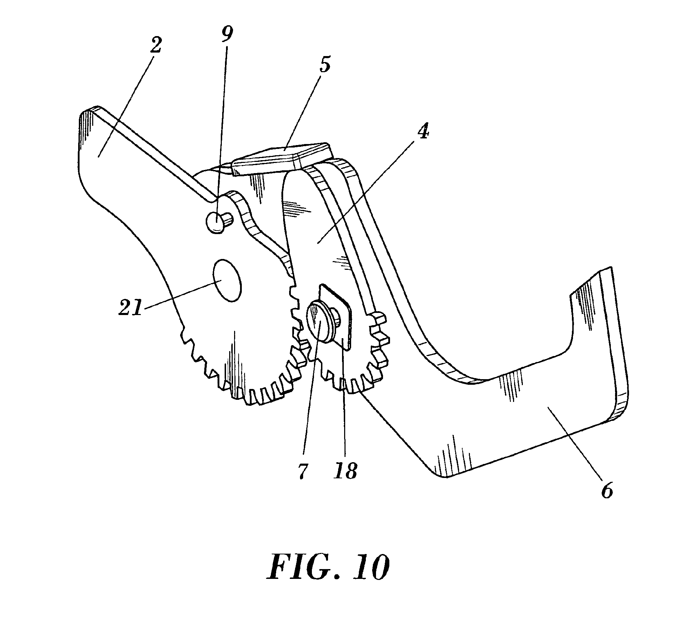

Figure 10. - It shows a view in perspective in which the detachable piece has not been represented, in accordance with the first solution for guided fall of figures 8 and 9.

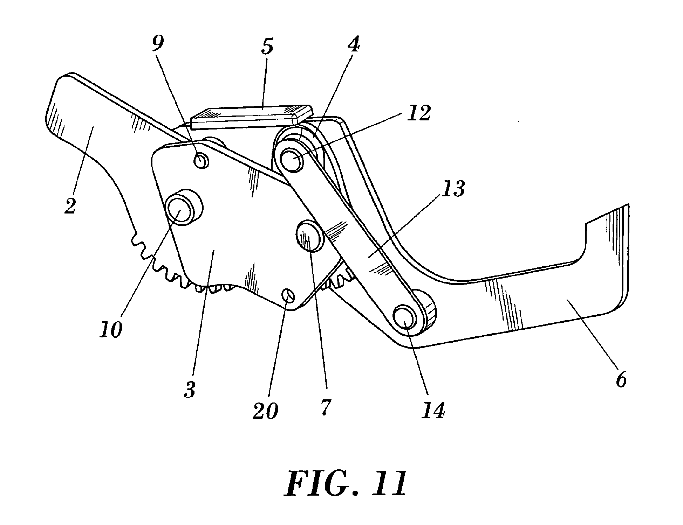

Figure 11. - It shows a left-hand general view in perspective in which the second solution appears for guided fall of the pedal consisting in introducing a connecting rod hinged on one end to the toothed cam and on the other end to the pedal body.

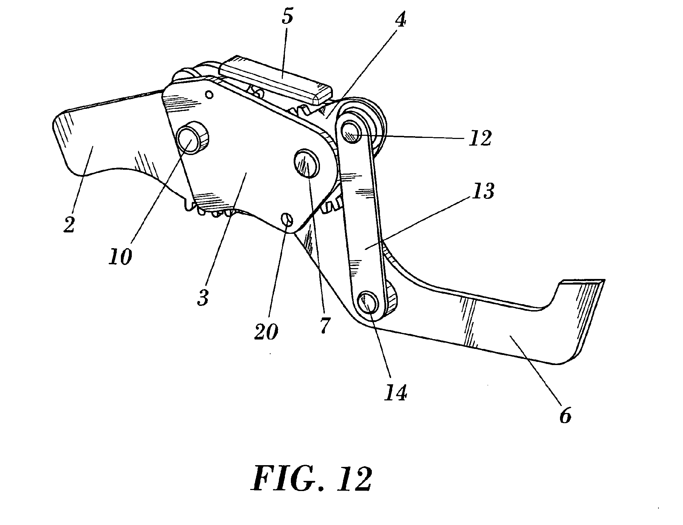

Figure 12. - It shows a left-hand general view in perspective in which the solution of the previous figure appears when the system has been activated.

### PREFERRED EMBODIMENT OF THE INVENTION

The mechanism for decoupling the brake pedal of a vehicle in the event of collision which constitutes the object of this invention is of application in a pedal assembly, located after the support of the steering column (12), which incorporates basically some fixed supports (1) around which rotates a brake pedal body (6) which when depressed acts on the connection (20) of a hydraulic control.

The mechanism for decoupling the brake pedal is distinguished fundamentally by the incorporation of a first toothed piece (2), facing the support of the steering column (12), which is fastened by means of a rivet (9) to the body of the pedal (6) and to a detachable piece (3) which provides the connection (20) to the hydraulic control, and meshes at all times with a toothed cam (4) which is hinged with respect to the detachable piece (3) on a riveted axle (7), the first toothed piece (2) and the detachable piece (3) being traversed by a shaft of the brake pedal (8) about which the body of the pedal (6) swivels, the latter having a welded butt (5) which rests on the toothed cam (4).

The detachable piece (3) has a first tubular portion (10) which engages on one of the supports (1), and also the body of the pedal (6) has a second tubular portion (11) which rotates with respect to the other fixed support (1), the shaft of the brake pedal (8) encountering, traversing the second tubular portion (11) of the pedal (6), an orifice (21) defined in the first toothed piece (2) and the second tubular portion (10) pertaining to the detachable piece (3).

During normal operation of the brake pedal the pedal body (6) with its butt (5), the detachable piece (3), the first toothed piece (2) and the toothed cam (4) form a solid block which transmits the thrust of the foot on the body of the pedal (6) to the rod of the hydraulic control which is joined to the connection (20) of the detachable piece (3).

The butt (5) welded to the pedal body (6) rests on the upper part of the toothed cam (4) which, in normal operation, has no relative motion with respect to the pedal body (6) because it is meshed with the first toothed piece (2) which is riveted to the detachable piece (3) and to the body of the pedal (6).

When the vehicle suffers a collision, the steering column support (12) strikes sharply on an extension (22) of the first toothed piece (2), making it rotate about the shaft of the brake pedal (8), snapping the rivet (9) which joined it to the pedal body (6) and to the detachable piece (3). The swivelling of this first toothed piece (2) causes, through its toothed sector, the turning of the toothed cam (4), around the riveted axle (7) which joins it to the detachable piece (3), whilst the detachable piece (3), which is joined to the hydraulic control through the connection (20), remains immobile.

When the toothed cam (4) rotates, the support which was present between the butt (5) and said toothed cam (4) vanishes causing the fall of the pedal body (6) which rotates around its shaft of rotation (8), the brake pedal body (6) being freed from some of its supports and thereby ceasing to constitute an obstacle for the progress of the support of the steering column (12).

An embodiment is envisioned in which the mechanism for decoupling can incorporate complementarily and with the object of facilitating the guided fall of the pedal body (6), a first pulley (15) firmly joined to the toothed cam (4) through a first coupling (18) which is secured to the riveted axle (7), as well as a second pulley (16) firmly joined to the pedal body (6) through a second coupling (19), the pulleys (15) and (16) being linked by means of a belt (17) which serves to transmit the turning motion from one pulley to the other.

When the steering column (12) support strikes against the first toothed piece (2) which meshes with the toothed cam (4) firmly joined to the first pulley (15) through a first coupling (18), it causes the first pulley (15) to rotate and by means of the belt (17) it transmits the turning motion to the second pulley (16), which is firmly joined to the body of the pedal (6) through a second coupling (19), and therefore the rotation of the pulley (16) is transmitted to the pedal body (6) turning it downwards and freeing space for the progress of the steering column (12).

The first and second coupling (18), (19) consists of a square piece which fits in a space defined in the pulley (15), (16) respectively and is provided with a circular central opening which fits on the riveted axle (7) and on the second tubular portion (11) of the body of the pedal (6) respectively.

Another embodiment is envisioned to facilitate the guided fall of the pedal body (6) which comprises a connecting rod (13) hinged on one end to the toothed cam (4) by means of an upper shaft (12) and hinged to the pedal body (6) by means of a lower shaft (14).

When the steering column (12) support strikes against the first toothed piece (2) which meshes with the toothed cam (4), this toothed cam (4) rotates with respect to the detachable piece (3) around the riveted axle (7) and transmits the turning motion to the pedal body (6) by means of the connecting rod (13) which is hinged to the toothed cam (4) by means of the upper shaft (12) and to the pedal body (6) by means of the lower shaft (14), causing the pedal body (6) to fall downwards freeing space for the progress of the steering column (12).

## Claims

1. - Mechanism for decoupling the brake pedal in the event of collision which is of application for a pedal assembly, located after the support of the steering column (12), which incorporates basically some fixed supports (1) around which a brake pedal body (6) rotates with intervention of a shaft of rotation (8) supported by its ends in the fixed supports (1), which when depressed acts on a hydraulic control, said mechanism comprising:
- A butt (5) welded to the brake pedal (6)
- a detachable piece (3) which incorporates the connection (20) for the hydraulic control
- a first toothed piece (2) intended to receive the impact of the support of the steering column (12), joined to the detachable piece (3) and to the brake pedal (6), by means of a rivet (9) or the like, said toothed piece (2) and the detachable piece (3) being traversed by the shaft of rotation (8), with respect to which the body of the brake pedal (6) swivels, **characterised in that** said first toothed piece (2) is meshed at all times with
- a toothed cam (4) which is hinged with respect to the detachable piece (3), through an axle (7), on the upper part of which rests the butt (5) of the brake pedal (6), the detachable piece (3), the toothed piece (2) and the toothed cam (4) forming a solid block which transmits the thrust of the foot on the brake pedal (6) to the hydraulic control which is joined to the connection (20) of the detachable piece (3), whereby, the displacement of the support of the steering column (12) collides with an extension (22) of the toothed piece (2), causing the snapping of the rivet (9) and, in consequence, the turning of said first toothed piece (2) with respect to the shaft (8), whereby said first toothed piece (2) through its toothed segment, makes the toothed cam (4) rotate around the hinge (7) to the detachable piece (3), the contact disappearing between the upper part of the cam (4) and the butt (5), so that the brake pedal (6) falls freely rotating around its shaft of rotation (8).

2. - Mechanism for decoupling the brake pedal in the event of collision according to claim 1 **characterised in that** the detachable piece (3) has a first tubular portion (10) which engages in one of the supports (1), while the body of the pedal (6) has a second tubular portion (11) which rotates with respect to the other fixed support (1), the shaft of the brake pedal (8) crossing the second tubular portion (11) of the pedal (6) encountering an orifice (21) defined in the first toothed piece (2) and the second tubular portion (10) pertaining to the detachable piece (3).

3. - Mechanism for decoupling the brake pedal in the event of collision according to previous claims **characterised in that** it incorporates a first pulley (15) firmly joined to the toothed cam (4) through a first coupling (18) which is secured to the riveted axle (7), and also a second pulley (16) firmly joined to the pedal body (6) through a second coupling (19), the pulleys (15) and (16) being linked by means of a belt (17) which serves to transmit the turning motion of one pulley to the other one to facilitate the guided fall of the body of the pedal (6).

4. - Mechanism for decoupling the brake pedal in the event of collision according to claim 3 **characterised in that** the first and second coupling (18), (19) consists of a square piece which fits in a space defined in the pulley (15), (16) respectively and is provided with a circular central opening which fits on the riveted axle (7) and on the second tubular portion (11) of the body of the pedal (2) respectively.

5. - Mechanism for decoupling the brake pedal in the event of collision according to claims 1 and 2 **characterised in that** it incorporates a connecting rod (13) hinged at one end to the toothed cam (4) by means of a upper shaft (12) and hinged to the pedal body (6) by means of a lower shaft (14) which facilitates the guided fall of the pedal body (6).

## Patentansprüche

1. - Mechanismus zum Entkoppeln des Bremspedals im Falle des Zusammenstoßes, das für eine Pedalanordnung anwendbar ist, die hinter der Abstützung für die Steuersäule (12) angeordnet ist, die im Wesentlichen einige feste Unterstützungen (1) aufweist, um die der Bremspedalkörper (6) mit Zwischenschaltung einer Drehachse (8) rotiert, die an ihren Enden durch die festen Abstützungen (1) abgestützt ist, der, wenn er niedergedrückt wird, auf eine hydraulische Steuerung wirkt, welcher Mechanismus aufweist:
- ein Endstück (5), das am Bremspedal (6) angeschweißt ist,
- ein lösbares Stück (3), das die Verbindung (20) für die hydraulische Steuerung einschließt,
- ein erstes gezahntes Stück (2), das bestimmt ist, den Stoß der Abstützung der Steuersäule (12) aufzunehmen, das mit dem lösbaren Stück (3) und dem Bremspedal (6) mit Hilfe einer Niete (9) oder dergleichen verbunden ist, welches gezahnte Stück (2) und das lösbare Stück (3) durch die Drehachse (8), um die der Körper des Bremspedals (6) schwenkt, durchquert werden, **dadurch gekennzeichnet, dass** das erste gezahnte Stück (2) zu allen Zeitpunkten mit
- einem gezahnten Nocken (4) in Eingriff ist, der in Bezug auf das lösbare Stück (3) durch eine Achse (7) schwenkbar angebracht ist, auf dessen oberem Teil das Endstück (5) des Bremspedals (6) ruht,
wobei das lösbare Stück (3), das gezahnte Stück (2) und der gezahnte Nocken (4) einen massiven Block bilden, der den Druck des Fußes auf das Bremspedal (6) zur hydraulischen Steuerung überträgt, die mit der Verbindung (20) des lösbaren Stücks (3) verbunden ist, wobei die Verschiebung der Abstützung der Steuersäule (12) mit einer Verlängerung (22) des gezahnten Stückes (2) zusammenstößt, was das Zerbrechen der Niete (9) und als Ergebnis das Drehen des ersten gezahnten Stücks (2) in Bezug auf die Achse (8) bewirkt, wobei das erste gezahnte Stück (2) durch sein gezahntes Segment bewirkt, dass sich der gezahnte Nocken (4) um die Schwenkverbindung (7) zum lösbaren Stück (3) dreht, wobei der Kontakt zwischen dem oberen Teil des Nockens (4) und dem Endstück (5) aufhört, so dass das Bremspedal frei sich um seine Drehachse drehend fällt.

2. - Mechanismus zum Entkoppeln des Bremspedals im Falle eines Zusammenstoßes nach Anspruch 1, **dadurch gekennzeichnet, dass** das lösbare Stück (3) einen ersten röhrenförmigen Teil (10) hat, der an einer der Abstützungen (1) angreift, während der Körper des Pedals (6) einen zweiten röhrenförmigen Abschnitt (11) hat, der sich in Bezug auf die andere feste Abstützung (1) dreht, wobei die Achse des Bremspedals (8) den zweiten röhrenförmigen Teil (11) des Pedals (6) kreuzt und auf eine Öffnung (21) trifft, die im ersten gezahnten Stück (2) und dem zweiten röhrenförmigen Teil (10) gebildet ist, der zum lösbaren Stück (3) gehört.

3. - Mechanismus zum Entkoppeln des Bremspedals im Falle eines Zusammenstoßes gemäß vorangehenden Ansprüchen, **dadurch gekennzeichnet, dass** er eine erste Riemenscheibe (15), die fest mit dem gezahnten Nocken (4) durch eine erste Kupplung (18) verbunden ist, die an der mit der Niete versehenen Achse (7) befestigt ist, und auch eine zweite Riemenscheibe (16) aufweist, die fest an dem Pedalkörper (6) durch eine zweite Kupplung (19)verbunden ist, wobei die Riemenscheiben (15) und (16) mit Hilfe eines Riemens (17) verbunden sind, der dazu dient, die Bewegung einer Riemenscheibe zu der anderen zu übertragen, um den geführten Fall des Körpers des Pedals (6) zu erleichtern.

4. - Mechanismus zum Entkoppeln des Bremspedals im Falle eines Zusammenstoßes gemäß Anspruch 3, **dadurch gekennzeichnet, dass** die erste und zweite Kupplung (18), (19) aus einem rechteckigen oder quadratischen Stück besteht, das in einen Raum hineinpasst, der in der Riemenscheibe (15), (16) gebildet ist, und mit einer kreisförmigen mittigen Öffnung versehen ist, die auf die mit der Niete versehene Achse (7) und auf den zweiten röhrenförmigen Teil (11) des Körpers des Pedals (2) passt.

5. - Mechanismus zum Entkoppeln des Bremspedals im Falle eines Zusammenstoßes nach Anspruch 1 und 2, **dadurch gekennzeichnet, dass** er eine Verbindungsstange (13) aufweist, die an einem Ende an dem gezahnten Nocken (4) durch eine obere Achse (12) schwenkbar angelenkt ist und an dem Pedalkörper (6) mit Hilfe einer unteren Achse (14) schwenkbar angebracht ist, die den geführten Fall des Pedalkörpers (6) erleichtert.

## Revendications

1. Mécanisme pour le découplage d'une pédale de frein en cas de collision dans l'application à un assemblage de pédale, disposé après le support de la colonne de direction (12), qui incorpore basiquement des support fixes (1) autour desquels un corps de pédale de frein (6) est en rotation avec intervention d'un arbre de rotation (8) supporté par ses extrémités dans les supports fixes (1), qui, lorsqu'ils sont soumis à une pression, agissent sur une commande hydraulique, le dit mécanisme comprenant :
- une butée (5) soudée à la pédale de frein (6) ;
- un élément détachable (3) qui incorpore la connection (20) pour la commande hydraulique ;
- un premier élément denté (2) destiné à recevoir l'impact du support de la colonne de direction (12), fixé à l'élément détachable (3) et à la pédale de frein (6), au moyen d'un rivet (9) ou équivalent, le dit élément denté (2) et l'élément détachable (3) étant traversés par l'arbre de rotation (8) par rapport auquel le corps de la pédale de frein (6) pivote,
**Caractérisé en ce que,**
Le dit premier élément denté (2) est en prise à tout moment avec une came dentée (4) articulée par rapport à l'élément détachable (3) au travers d'un axe (7) sur la partie supérieure duquel repose la butée (5) de la pédale de frein (6),
L'élément détachable (3), l'élément denté (2) et la came dentée (4) formant un bloc solide qui transmet la poussée du pied sur la pédale de frein (6), à la commande hydraulique qui est jointe à la connection (20) de l'élément (3) détachable, tandis que le déplacement du support de la colonne de direction (12) entre en collision avec une extension (22) de l'élément denté, provoquant l'arrachage du rivet (9) et en conséquence la rotation par rapport à l'axe (8), tandis que par son segment denté, provoque la rotation de la came dentée autour de l'articulation (7) par rapport à l'élément détachable (3), le contact disparaissant entre la partie supérieure de la came (4) et de la butée (5), de façon que la pédale de frein (6) tombe librement en rotation autour de son arbre de rotation (8).

2. Mécanisme pour le découplage d'une pédale de frein en cas de collision selon la revendication 1, **caractérisé en ce que** l'élément (3) détachable présente une première partie (10) tubulaire qui est en prise avec un des supports (1), tandis que le corps de la pédale (6) présente une seconde partie tubulaire (11) qui tourne par rapport à l'autre support fixe (1), l'arbre de la pédale de frein (8) croisant la seconde part dite tubulaire (11) de la pédale (6) rencontrant un orifice (21) définit dans le premier élément denté (2) et la seconde partie (10) tubulaire appartenant à l'élément détachable (3).

3. Mécanisme pour le découplage d'une pédale de frein en cas de collision selon l'une des revendications précédentes, **caractérisé en ce qu'**elle inclut une première poulie (15) fixée fermement à la came dentée (4) au travers d'un premier couplage fixé à l'axe riveté (7) et également une seconde poulie (16) fermement fixée au corps de pédale (6) au travers d'un second couplage (19), les poulie (15) et (16) étant liées au moyen d'une courroie (17) qui sert à transmettre le mouvement de rotation d'une poulie à l'autre, pour faciliter la chute guidée du corps de la pédale (6).

4. Mécanisme pour le découplage d'une pédale de frein en cas de collision selon la revendication (3) **caractérisé en ce que** les premier et second couplages (18) et (19) consistent en une pièce carrée qui prend place dans un espace défini dans la poulie (15), (16), respectivement, et est pourvue d'une ouverture centrale circulaire qui s'adapte à l'axe (7) riveté et sur la partie tubulaire seconde (11) du corps de pédale (2) respectivement.

5. Mécanisme pour le découplage d'une pédale de frein en cas de collision selon l'une des revendications 1 et 2, **caractérisé en ce qu'**elle comporte une tige (13) de connection articulée à une extrémité sur la came (4) dentée au moyen d'un arbre supérieur (12) et articulé sur le corps de pédale (6) aux moyens d'un arbre inférieur (14) qui facilite la chute guidée du corps de pédale (6).
